# EUROPEAN PATENT APPLICATION

(11) **EP 4 122 635 A1**
(43) Date of publication of application: **25.01.2023**
(21) Application number: 21772052.3
(22) Date of filing: 11.03.2021
(51) Int. Cl.: B23K 26/073, B23K 26/067, B23K 26/21

(54) **WELDING METHOD AND WELDING DEVICE**

(30) Priority: 16.03.2020 JP 2020045780
(71) Applicant: FURUKAWA ELECTRIC CO., LTD., Chiyoda-ku Tokyo 100-8322 (JP)
(72) Inventor: MATSUNAGA, Keigo, Tokyo 100-8322 (JP); KAYAHARA, Takashi, Tokyo 100-8322 (JP); YASUOKA, Tomomichi, Tokyo 100-8322 (JP); TAKADA, Kazuki, Tokyo 100-8322 (JP); SHIGEMATSU, Takashi, Tokyo 100-8322 (JP)
(74) Representative: SSM Sandmair
(86) International application number: PCT/JP2021/009772
(87) International publication number: WO 2021/187311

(57) **Abstract**

A welding method includes irradiating a surface of a workpiece with a laser light that moves relatively to the workpiece in a sweep direction, and performing welding by melting a part of the workpiece irradiated with the laser light. The laser light contains a plurality of beams. The plurality of beams includes at least one main beam and at least one sub beam smaller in power than the main beam. A main power region including the at least one main beam and a sub power region including the at least one sub beam are formed on the surface. A minimum distance between centers of adjacent ones of the plurality of beams on the surface is 75 [pm] or less.

## Description

### Field

The present invention relates to a welding method and a welding apparatus.

### Background

Laser welding is known as one of the methods for welding a workpiece made of a metallic material. The laser welding is a welding method that irradiates the part of a workpiece to be welded with a laser light and melts this part by the energy of the laser light. A pool of molten metal material called a molten pool is formed at the part irradiated with the laser light, and then the molten pool becomes solidified, by which welding is performed.

Further, there is a case where the profile of a laser light is shaped when the laser light is used to irradiate a workpiece, depending on the purpose. For example, a technique is known in which the profile of a laser light is shaped when the laser light is used to cut a workpiece (see Patent Literature 1, for example).

### Citation List

### Patent Literature

Patent Literature 1: Japanese National Publication of International Patent Application No. 2010-50814

### Summary

### Technical Problem

By the way, it is known that, during welding, scattered substances called spatters are generated from this molten pool. These spatters come from a scattered molten metal, and it is important to reduce the generation of the spatters in order to prevent working defects. Further, since the splatters are a scattered molten metal, when the splatters are generated, the metallic material at the weld portion comes to be reduced. In other words, as the generation of the spatters is larger, the metallic material at the weld portion becomes insufficient and could cause poor strength or the like. In addition, the generated spatters adhere to the portions around the weld portion. When some of these spatters peel off later and attach to an electric circuit, an abnormality could be caused in the electric circuit. Therefore, it is sometimes difficult to perform welding onto parts for electric circuits.

Further, in the welding of this type, when the workpiece is smaller or thinner, it is necessary to make the area of the weld zone smaller, that is, to make the diameter of the beam smaller.

Therefore, one of the issues of the present invention is, for example, to provide a new welding method and welding apparatus that can make the area of the weld zone smaller, that is, the diameter of the beam smaller, while suppressing the spatters.

### Solution to Problem

For example, a welding method according to the present invention includes: irradiating a surface of a workpiece with a laser light that moves relatively to the workpiece in a sweep direction; and performing welding by melting a part of the workpiece irradiated with the laser light, wherein the laser light includes a plurality of beams, the plurality of beams include at least one main beam and at least one sub beam smaller in power than the main beam, a main power region including the at least one main beam and a sub power region including the at least one sub beam are formed on the surface, and a minimum distance between centers of adjacent ones of the plurality of beams on the surface is 75 um or less.

In the welding method, the laser light may be a single mode laser light.

In the welding method, on the surface, each of the plurality of beams may have a diameter of 100 um or less.

In the welding method, on the surface, a distance between centers of the plurality of beams most distant in a direction orthogonal to the sweep direction may be 300 um or less.

In the welding method, a ratio of a power of the main power region and a power of the sub power region may fall within a range of 72:1 to 1:50.

In the welding method, the at least one sub beam may be arranged ahead of the at least one main beam in the sweep direction.

In the welding method, the at least one sub beam may be arranged behind the at least one main beam in the sweep direction.

In the welding method, the at least one sub beam may be arranged with respect to the at least one main beam with a shift in a direction intersecting with the sweep direction.

In the welding method, as the at least one sub beam, a plurality of sub beams may be arranged around the at least one main beam.

In the welding method, the plurality of sub beams may be arranged in a circular arc pattern.

In the welding method, the plurality of sub beams may be arranged in a quadrangular pattern.

In the welding method, the main power region and the sub power region may be arranged such that a molten pool formed by the at least one main beam contained in the main power region and a molten pool formed by the at least one sub beam contained in the sub power region partially overlap each other.

In the welding method, a wavelength of a laser light of the at least one main beam contained in the main power region and a wavelength of a laser light of the at least one sub beam contained in the sub power region may be equal to each other.

In the welding method, a wavelength of a laser light of the at least one sub beam contained in the sub power region may be a wavelength that has a higher absorption rate for the workpiece as compared with a wavelength of a laser light of the at least one main beam contained in the main power region.

In the welding method, a laser light of the at least one main beam contained in the main power region and a laser light of the at least one sub beam contained in the sub power region may be emitted from a common oscillator.

In the welding method, a laser light of the at least one main beam contained in the main power region and a laser light of the at least one sub beam contained in the sub power region may be emitted from different laser oscillators.

In the welding method, M² beam quality of the laser light may be 1.3 or less.

In the welding method, a distance between centers of the plurality of beams may be 5 um or more.

In the welding method, arrangement of the plurality of beams may be formed by a beam shaper.

In the welding method, the beam shaper may be a diffractive optical element.

In the welding method, the workpiece may include at least two members superposed on each other.

In the welding method, a diameter of the main beam may be equal to a diameter of the sub beam.

For example, a welding apparatus according to the present invention includes: a laser oscillator; and an optical head configured to irradiate a surface of a workpiece with a laser light including a plurality of beams obtained by shaping light emitted from the laser oscillator, and perform welding by melting a part of the workpiece irradiated with the laser light, wherein the welding apparatus is configured to: perform relative displacement between the workpiece and at least part of the optical head to move the laser light relatively to the workpiece in a sweep direction; cause the plurality of beams to include at least one main beam and at least one sub beam smaller in power than the main beam; form a main power region including the at least one main beam and a sub power region including the at least one sub beam on the surface; and set a minimum distance between centers of adjacent ones of the plurality of beams on the surface to be 75 um or less.

### Advantageous Effects of Invention

According to the present invention, it is possible to suppress the generation of the spatters, and to make the area of the weld zone smaller, that is, the diameter of the beam smaller.

### Brief Description of Drawings

FIG. 1 is an exemplary schematic configuration diagram of a laser welding apparatus according to a first embodiment.
FIG. 2 is an explanatory diagram illustrating the concept of the principle of a diffractive optical element included in the laser welding apparatus according to the first embodiment.
FIG. 3 is a schematic diagram illustrating an example of beams (spots), on the surface of a workpiece, of a laser light radiated from the laser welding apparatus according to the first embodiment.
FIG. 4 is a schematic diagram illustrating an example of beams (spots), on the surface of a workpiece, of a laser light radiated from the laser welding apparatus according to the first embodiment.
FIG. 5 is an explanatory diagram illustrating an example of the intensity distribution of each beam in a direction orthogonal to the sweep direction, on the surface of the workpiece, of the laser light radiated from the laser welding apparatus according to the first embodiment.
FIG. 6 is an explanatory diagram illustrating another example of the intensity distribution of each beam in a direction orthogonal to the sweep direction, on the surface of the workpiece, of the laser light radiated from the laser welding apparatus according to the first embodiment.
FIG. 7 is a graph illustrating the ratio of the number of spatters in welding by the laser welding apparatus according to the first embodiment, relative to the number of spatters in welding by a laser welding apparatus having no diffractive optical element as a reference example.
FIG. 8 is an explanatory diagram illustrating the surface of a weld zone and changes in height of the surface, in the sweep direction, in the laser welding apparatus according to the first embodiment.
FIG. 9 is an exemplary schematic configuration diagram of a laser welding apparatus according to a second embodiment.
FIG. 10 is an exemplary schematic configuration diagram of a laser welding apparatus according to a third embodiment.
FIG. 11 is a schematic diagram illustrating an example of beams (spots), on the surface of a workpiece, of a laser light radiated from the laser welding apparatus according to the first embodiment.
FIG. 12 is a schematic diagram illustrating an example of beams (spots), on the surface of a workpiece, of a laser light radiated from the laser welding apparatus according to the first embodiment.
FIG. 13 is a schematic diagram illustrating an example of beams (spots), on the surface of a workpiece, of a laser light radiated from the laser welding apparatus according to the first embodiment.
FIG. 14 is a schematic diagram illustrating an example of beams (spots), on the surface of a workpiece, of a laser light radiated from the laser welding apparatus according to the first embodiment.
FIG. 15 is a diagram illustrating the arrangement of numbers indicating the position of each beam to explain, by a matrix with numbered cells, an example of beams (spots), on the surface of a workpiece, of a laser light radiated from the laser welding apparatus according to the first embodiment.
FIG. 16 is an explanatory diagram illustrating the arrangement of beams and the numbers of the respective beams for the example of FIG. 3.

### Description of Embodiments

Exemplary embodiments of the present invention will be disclosed hereinafter. The constituent elements of each of the embodiments described below and the functions and results (effects) obtained by the constituent elements are mere examples. The present invention may be embodied by constituent elements other than those disclosed in the embodiments described below. Further, according to the present invention, it is possible to obtain at least one of various effects (including derivative effects) obtained by the constituent elements.

The embodiments illustrated below include similar constituent elements. Therefore, according to the constituent elements of each embodiment, the same functions and effects based on the similar constituent elements can be obtained. Further, in the following description, the same reference numerals are given to those similar constituent elements, and repetitive explanations thereof may be omitted.

Further, in each of the drawings, the X-direction is represented by an arrow X, the Y-direction is represented by an arrow Y, and the Z-direction is represented by an arrow Z. The X-direction, the Y-direction, and the Z-direction intersect with each other and are orthogonal to each other. The Z-direction is the normal direction to the surface Wa (target surface) of the workpiece W.

### [First Embodiment]

### [Configuration of Laser Welding Apparatus]

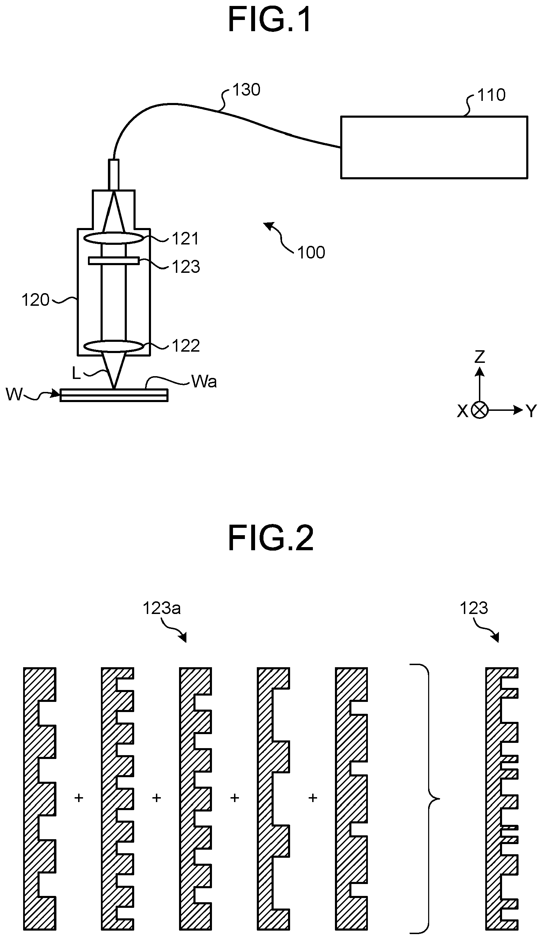

FIG. 1 is a diagram illustrating a schematic configuration of a laser welding apparatus 100 according to a first embodiment. The laser welding apparatus 100 includes a laser device 110, an optical head 120, and an optical fiber 130 connecting the laser device 110 and the optical head 120 to each other. The laser welding apparatus 100 is an example of a welding apparatus.

For example, a workpiece W to be worked in the laser welding apparatus 100 may be made of an iron-based metallic material, aluminum-based metallic material, copper-based metallic material, or the like. Further, the workpiece W has a plate-like shape, for example, and the thickness of the workpiece W is 1 [mm] or more and 10 [mm] or less, for example, though this is not limiting. Further, the workpiece W is formed of a plurality of members superposed on each other. The number of members and the thickness of each member may be changed in various ways.

The laser device 110 includes a laser oscillator, and is configured, for example, to output a laser light of a single mode with a power of several kW. Here, the laser device 110 may be provided, for example, with a plurality of semiconductor laser devices included therein to output a multi-mode laser light with a power of several kW as the total output of the plurality of semiconductor laser devices. Further, the laser device 110 may include various laser light sources, such as a fiber laser, YAG laser, and disk laser.

The optical fiber 130 guides the laser light output from the laser device 110 to the optical head 120. When the laser device 110 outputs a single mode laser light, the optical fiber 130 is configured to propagate the single mode laser light. In this case, the M² beam quality of the single mode laser light is set to 1.3 or less. The M² beam quality may also be referred to as M2 factor.

The optical head 120 is an optical device for radiating a laser light input from the laser device 110, toward the workpiece W. The optical head 120 includes a collimator lens 121, a condenser lens 122, and a DOE (diffractive optical element) 123. Each of the collimator lens 121, the condenser lens 122, and the DOE 123 may also be referred to as optical component.

The optical head 12 is configured to change its relative position to the workpiece W, in order to sweep the laser light L while irradiating the workpiece W with a laser light L. The relative displacement between the optical head 120 and the workpiece W can be achieved by moving the optical head 120, moving the workpiece W, or moving both the optical head 120 and the workpiece W.

The collimator lens 121 collimates the input laser light. The laser light thus collimated becomes collimated light. Further, the condenser lens 122 condenses the laser light that is the collimated light, and radiates the light onto the workpiece W as the laser light L (output light).

The DOE 123 is arranged between the collimator lens 121 and the condenser lens 122 to perform shaping of the beam shape of the laser light (which will be referred to as beam shape, hereinafter). As illustrated conceptually in FIG. 2, the DOE 123 has, for example, a configuration in which a plurality of diffractive gratings 123a different in period are superposed. The DOE 123 can perform shaping of the beam shape by bending or superimposing the collimated light in the direction affected by each of the diffractive gratings 123a. The DOE 123 may also be referred to as beam shaper.

### [Shape of Beam (Spot)]

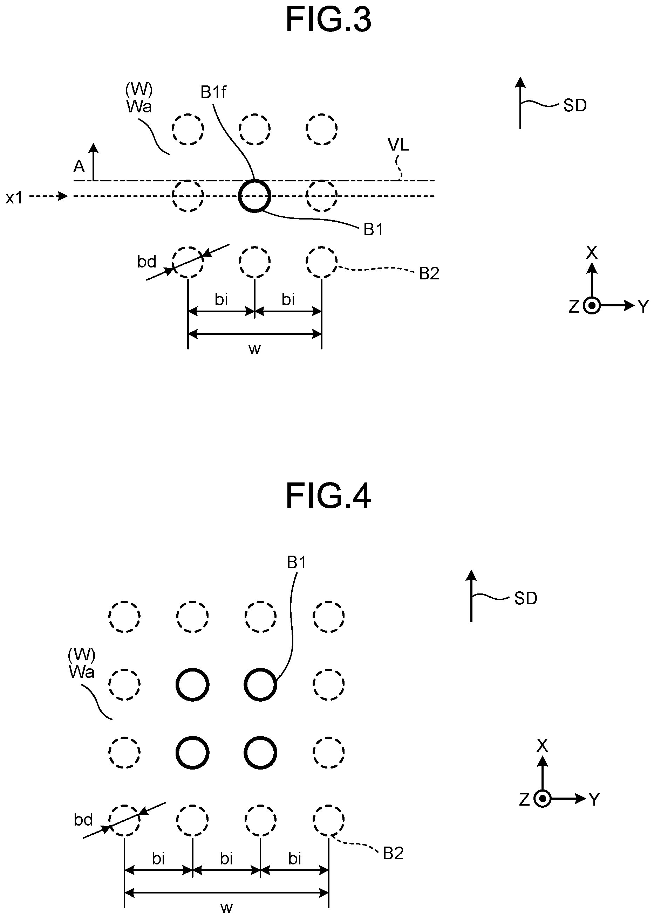

The DOE 123 divides the laser light input from the collimator lens 121 into a plurality of beams. Each of FIGS. 3 and 4 is a diagram illustrating an example of the beams (spots) of the laser light L formed on the surface Wa of the workpiece W. Here, in FIGS. 3 and 4, for the sake of simplicity, a main beam or main beams B1 are illustrated by a solid line and sub beams B2 are illustrated by a broken line. The arrow SD in FIGS. 3 and 4 indicates the sweep direction of the beams on the surface Wa of the workpiece W. As illustrated in FIGS. 3 and 4, the optical head 120 can output a laser light including a plurality of beams of various arrangements by exchanging the DOE 123.

The DOE 123 divides the laser light into a plurality of beams. The plurality of beams includes at least one main beam B1 and at least one sub beam B2. The sub beam B2 is a beam smaller in power than the main beam B1. For example, the ratio between the power of the main beam B1 and the power of the sub beam B2 is set to 2:1, but this is not limiting.

Further, the DOE 123 divides the laser light such that the spot of at least one main beam B1 and the spot of at least one sub beam B2 are formed on the surface Wa. In the example of FIG. 3, as a result of the beam shaping by the DOE 123, the spot of one main beam B1 and the spots of a plurality of sub beams B2 arranged in a square pattern (quadrangular pattern) around the spot of the main beam B1 are formed on the surface Wa. Further, in the example of FIG. 3, the plurality of beams are arranged in a square matrix format with three rows and three columns, in which the intervals between the beams in the row direction (Y-direction) and the intervals between the beams in the column direction (X-direction or sweep direction SD) are all set to be the same. Here, of the nine beams, the one beam in the center is the main beam B1, and the eight beams around this one main beam B1 are the sub beams B2.

On the other hand, in the example of FIG. 4, as a result of the beam shaping by the DOE 123, the spots of a plurality of main beams B1 and the spots of a plurality of sub beams B2 arranged in a square pattern (quadrangular pattern) around the spots of the plurality of main beams B1 are formed on the surface Wa. Further, in the example of FIG. 4, the plurality of beams are arranged in a square matrix format with four rows and four columns, in which the intervals between the beams in the row direction (Y-direction) and the intervals between the beams in the column direction (X-direction or sweep direction SD) are all set to be the same. Here, of the 16 beams, the four beams in the center are the main beams B1, and the 12 beams around these four main beams B1 are the sub beams B2. The region to be irradiated with the main beams B1 is an example of a main power region, and the region to be irradiated with the sub beams B2 is an example of a sub power region.

Further, according to the experimental research of the inventors, it has been found that the power ratio between the main power region including at least one main beam and the sub power region including at least one sub beam has a range that is suitable for suppressing the spatters, depending on the material of the workpiece. For example, the following ranges have been found: For iron-based metallic materials, such as carbon steel, stainless steel, and iron alloys, the power ratio between the main power region including at least one main beam and the sub power region including at least one sub beam is preferably 10:1 to 1:20. For copper-based metallic materials, such as pure copper and copper alloys, the power ratio between the main power region including at least one main beam and the sub power region including at least one sub beam is preferably 10:1 to 1:1. For aluminum-based metallic materials, such as pure aluminum and aluminum alloys, the power ratio between the main power region including at least one main beam and the sub power region including at least one sub beam is preferably 10:1 to 1:1.

Further, as illustrated in FIG. 3, the DOE 123 shapes the beams such that at least part of the spot of any one of the sub beams B2 is positioned ahead of the spot of the main beam B1 in the sweep direction SD on the surface Wa. Specifically, it suffices that any one of the sub beams B2 is at least partly positioned in a region A on the front side in the sweep direction SD, with respect to a virtual straight line VL that passes through the front end B1f of the main beam B1 and orthogonal to the sweep direction SD. Alternatively, the spot of any one of the sub beams B2 may be positioned behind the spot of the main beam B1. In this case, it suffices that any one of the sub beams B2 is at least partly positioned in a region (not illustrated) on the rear side in the sweep direction SD, with respect to a virtual straight line (not illustrated) that passes through the rear end (not illustrated) of the main beam B1 and orthogonal to the sweep direction SD.

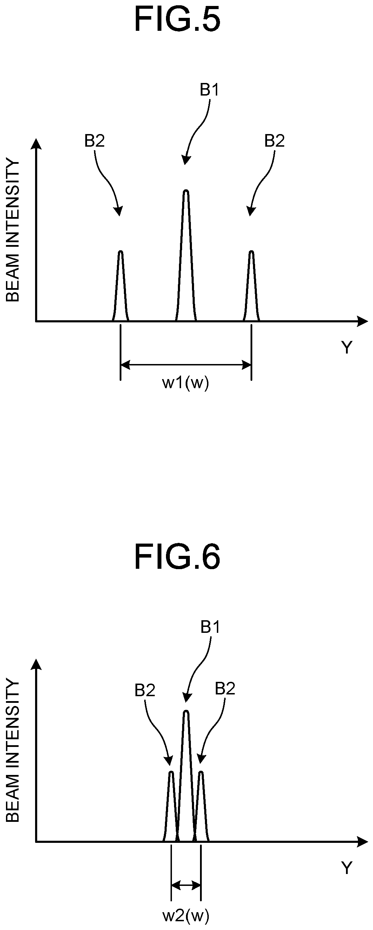

Each of FIGS. 5 and 6 is a diagram illustrating an example of the intensity distribution of each beam in a direction orthogonal to the sweep direction SD of the laser light, on the surface Wa of the workpiece W. Each of FIGS. 5 and 6 illustrates the distribution along the position x1 in FIG. 3. The position x1 is the position of the center of the main beam B1 in the X-direction.

As illustrated in FIGS. 3 to 6, in this embodiment, in the Y-direction, that is, in the width direction when the sweep direction SD is in the X-direction, the main beam or main beams B1 are positioned near the center of the irradiation region with the beams B1 and B2, and the sub beams B2 are positioned farther from the center. The width of the laser light L is defined as the distance w between the centers of the two beams most distant in the width direction. In the case of FIG. 5, the width of the laser light L is the distance w1 between the centers of beams (sub beams B2) positioned at both ends in the width direction, and, in the case of FIG. 6, the width of the laser light L is the distance w2 between the centers of beams (sub beams B2) positioned at both ends in the width direction.

According to the experimental research of the inventors, it has been found that the width of the laser light L is preferably 50 [um] or more and 300 [pm] or less, and more preferably 50 [um] or more and 200 [pm] or less. Further, it has been found that the diameter bd of each beam is preferably 100 [pm] or less, and more preferably 25 [pm] or less. Furthermore, it has been found that the minimum distance bi (see FIGS. 3 and 4) between adjacent ones of the plurality of beams is preferably 75 [pm] or less, and more preferably 50 [pm] or less.

In addition, a plurality of beams may be integrated. In this case, each of the main beams B1 and sub beams B2 has a power distribution of, for example, Gaussian shape in the diameter direction of its beam cross section. In this case, the beam diameter of each beam can be defined as the diameter of a region that includes the peak of this beam and has an intensity of 1/e² or more of the peak intensity. For non-circular beams, in this specification, the beam diameter is defined by the length of a region that has an intensity of 1/e² or more of the peak intensity, in a longer axis (the long axis, for example) passing near the center of the beam, or a shorter axis (the short axis, for example) in a direction perpendicular to the longer axis (the long axis). Further, the power of each beam is the power of a region that includes the peak of this beam and has an intensity of 1/e² or more of the peak intensity.

The laser welding apparatus 100 can output the laser light L including main beams B1 and sub beams B2 as described above, by appropriate design and/or adjustment of the laser device 110, the optical fiber 130, the collimator lens 121, the condenser lens 122, and the DOE 123.

### [Welding Method]

In welding using the laser welding apparatus 100, the workpiece W is first set in the region to be irradiated with the laser light L. Then, under the state of the workpiece W being irradiated with the laser light L that contains the main beams B1 and the sub beams B2 divided by the DOE 123, the relative displacement between the laser light L and the workpiece W is performed. As a result, the laser light L moves (sweeps) on the surface Wa in the sweep direction SD, while irradiating the surface Wa. The part irradiated with the laser light L is melted, and then becomes solidified as the temperature decreases, so that the workpiece W is welded. In this embodiment, the sweep direction SD is in the X-direction, as an example, but the sweep direction SD needs only to intersect with the Z-direction, and is not limited to the X-direction.

According to the experimental research of the inventors, it has been confirmed that the generation of the spatters can be suppressed by positioning at least part of the region of the sub beams B2 forward in the sweep direction SD with respect to the main beams B1 in the laser light L. This can be estimated such that, for example, since the workpiece W is preheated by the sub beams B2 before the arrival of the main beams B1, the molten pool of the workpiece W formed by the sub beams B2 and the main beams B1 becomes more stable.

Here, from the viewpoint of performing sufficient preheating in a relatively wide range, it has been found that the minimum distance between the plurality of beams is preferably 5 [pm] or more, and more preferably 10 [pm] or more.

### [Experimental Result]

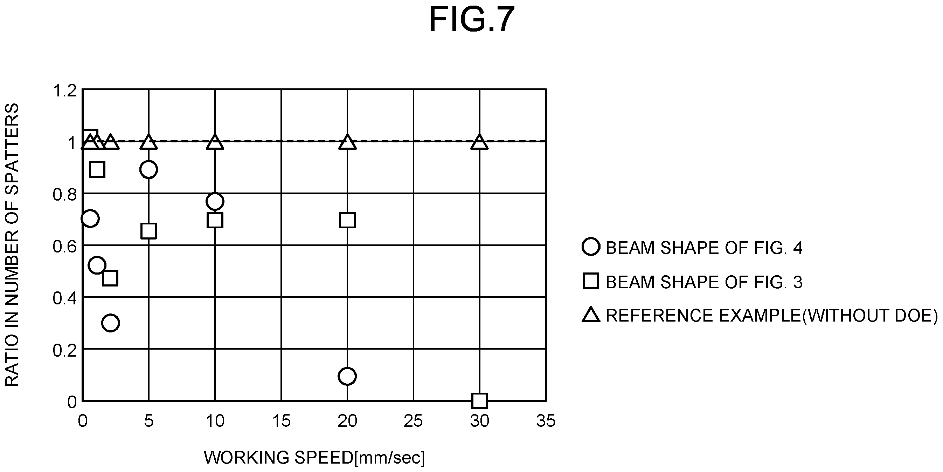

FIG. 7 is a graph illustrating the ratio of the number of spatters in welding by the laser welding apparatus 100 according to this embodiment, relative to the number of spatters in welding by a laser welding apparatus 100 having no DOE 123 as a reference example.

By use of a laser welding apparatus 100, the inventors conducted an experiment of actually irradiating a workpiece W with a laser light L having the beam shape of each of FIGS. 3 and 4 to perform laser welding and measure the number of spatters. Further, as a reference example, for a case where the DOE 123 was omitted, the inventors conducted an experiment of irradiating a workpiece W with a laser light having a single beam (spot), under the same conditions, to measure the number of spatters. The graph illustrated in FIG. 7 indicates the ratio of the number of spatters in each of FIGS. 3 and 4 to the number of spatters in the reference example.

In this experiment, the number of spatters exceeding 50 [pm] generated in welding was measured in cases where the relative displacement speed (which will be referred to as sweep speed, hereinafter) between the surface Wa and the laser light L was set to 30 [m/min], 20 [m/min], 10 [m/min], 5 [m/min], 2 [m/min], 1 [m/min], and 0.5 [m/min].

In this experiment, the wavelength of the laser light output from the laser device 110 was set to 1,070 [nm], and, in all the cases of the beam shape of FIG. 3 (○ in FIG. 7), the beam shape of FIG. 4 (□ in FIG. 7), and the reference example (△ in FIG. 7), the total value of the power of the laser light L was set to 1.5 [kW], even though these cases were different in the number of beams and the arrangement thereof.

In this experiment, in the cases of the beam shape of FIG. 3 and the beam shape of FIG. 4, the width w (w1, w2) of the laser light L was set to 100 [pm], and the diameter bd of the spot of each beam was set to 21 [pm]. Further, the distance in the X-direction and Y-direction between the centers of adjacent beams was set to 33 [pm] in the case of the beam shape of FIG. 3, and set to 25 [um] in the case of the beam shape of FIG. 4. Further, the M² beam quality was set to 1.06.

In addition, as the workpiece W, one sheet of stainless steel (SUS 304) with a thickness of 10 [mm] was used. When workpieces W superposed in the thickness direction (Z-direction) are in close contact with each other, it can be estimated that the aspect ratio does not depend on the thickness of the workpieces W or the number thereof. In other words, even when the workpiece W is formed of a plurality of plates of the same material that are in close contact with each other in the thickness direction, it can be estimated that the same result will be obtained as in this experiment where the workpiece W was a single plate.

As illustrated in FIG. 7, in the experiment, the ratio was 1 or less in each of the cases. In other words, in all the cases where welding was performed with the beam shape of FIG. 3 and the beam shape of FIG. 4, the number of spatters did not exceed the reference example.

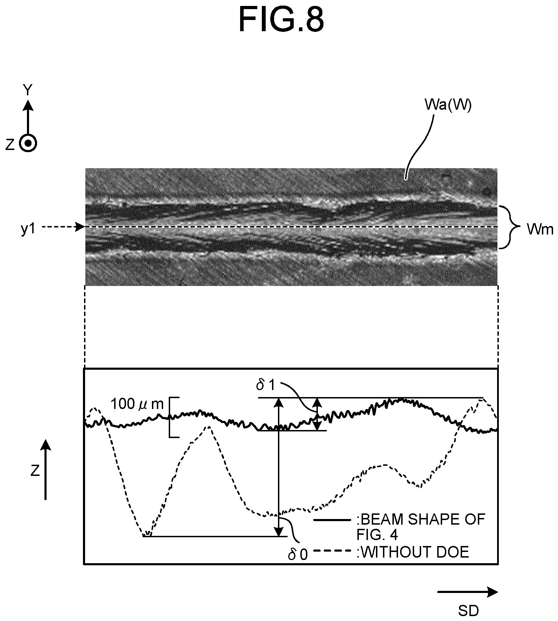

Further, it has been confirmed that humping is reduced in this experiment. The humping is a phenomenon in which the surface tension of the molten metal becomes unbalanced during welding, and the fluid flow rate backward in the direction of welding progress within the molten metal becomes intermittent, so that peaks and troughs of the molten metal are periodically generated. FIG. 8 illustrates the surface Wa of a weld zone Wm and changes in height of the surface Wa, in the sweep direction, in the case of the beam shape of FIG. 4. In FIG. 8, the upper part is a photograph of the surface Wa of the weld zone Wm, while the lower part illustrates, by a solid line, changes in the Z-direction position of the surface Wa of the weld zone Wm along a position y1 in the upper photograph, and also illustrates, by a broken line, changes in the Z-direction position of the surface Wa of the weld zone Wm in the reference example including no DOE 123. As illustrated in the lower part of FIG. 8, it can be seen that this embodiment rendered a maximum difference of 51 in the Z-direction position of the surface Wa along the position y1, while the reference example rendered a maximum difference of δ0, by which 51 < 50. Thus, according to this embodiment, it is possible to reduce the humping, as compared with the reference example including no DOE 123.

As described above, in this embodiment, the laser light L output from the laser welding apparatus 100 contains a plurality of beams, and the plurality of beams include at least one main beam B1 and at least one sub beam B2 smaller in power than the main beam B1, such that a main power region including at least one main beam B1 and a sub power region including at least one sub beam B2 are formed on the surface Wa. Further, the minimum distance between the centers of the adjacent ones of the plurality of beams on the surface Wa is set to 75 [pm] or less.

According to such a welding method and welding apparatus, it is possible to narrow the width of the weld zone Wm while suppressing the generation of the spatters.

Further, according to the experimental research of the inventors, it has been found that the diameter of each beam (the main beam B1 or sub beam B2) is preferably 100 [pm] or less on the surface Wa, and the distance between the centers of a plurality of beams most distant in a direction orthogonal to the sweep direction SD is preferably 300 [pm] or less on the surface Wa.

According to such a welding method and welding apparatus, it is possible to narrow the width of the weld zone Wm while suppressing the generation of the spatters, for example.

Further, the M² beam quality of the laser light L is preferably 1.3 or less. This makes it possible to narrow the width of the weld zone Wm while suppressing the generation of the spatters.

Further, according to the experimental research of the inventors, it has been found that, as illustrated in FIGS. 3 and 4, in every one of the case where at least one sub beam B2 is arranged ahead of at least one main beam B1 in the sweep direction SD, the case where at least one sub beam B2 is arranged behind at least one main beam B1 in the sweep direction SD, the case where at least one sub beam B2 is arranged with respect to at least one main beam B1 with a shift in a direction intersecting with the sweep direction SD, the case where a plurality of sub beams B2 are arranged around at least one main beam B1, and the case where a plurality of sub beams are arranged in a quadrangular pattern, it is possible to narrow the width of the weld zone Wm while suppressing the generation of the spatters.

Further, according to the experimental research of the inventors, it has been found that, in the case where the ratio between the power of the main power region and the power of the sub power region falls within a range of from 72:1 to 1:50, it is possible to narrow the width of the weld zone Wm while suppressing the generation of the spatters.

Further, in this embodiment, the main power region and the sub power region may be arranged such that the molten pool formed by at least one main beam B1 contained in the main power region and the molten pool formed by at least one sub beam B2 contained in the sub power region partially overlap each other. In this case, at least part of the energy of the main beam B1 is irradiated onto the molten pool formed by the sub beam B2 in the workpiece W. As a result, the molten pool formed by the main beam B1 is relatively stable, and the effect of suppressing the generation of the spatters can be obtained.

Further, in this embodiment, the main beam B1 may have a power density that allows the workpiece W to generate a keyhole. In this case, the penetration depth in welding can be made larger.

Further, in this embodiment, the wavelength of the laser light of at least one main beam contained in the main power region and the wavelength of the laser light of at least one sub beam contained in the sub power region may be equal to each other. In this case, it is possible to generate the main beam and the sub beam from a single laser light.

Further, in this embodiment, the wavelength of the laser light of at least one sub beam contained in the sub power region may be a wavelength that has a higher absorption rate for the workpiece as compared with the wavelength of the laser light of at least one main beam contained in the main power region. In this case, even when the power or power density of the sub beam is relatively low, the energy given to the workpiece can be relatively large, which makes it possible to enjoy the effect of the sub beam irradiation.

Further, in this embodiment, the laser light of at least one main beam contained in the main power region and the laser light of at least one sub beam contained in the sub power region may be emitted from a common oscillator. In this case, the main beam and the sub beam can be generated from the laser light emitted from a single oscillator.

Further, in this embodiment, the laser light of at least one main beam contained in the main power region and the laser light of at least one sub beam contained in the sub power region may be emitted from different laser oscillators. In this case, it becomes easier to set the characteristics of the main beam and the sub beam independently of each other.

### [Second Embodiment]

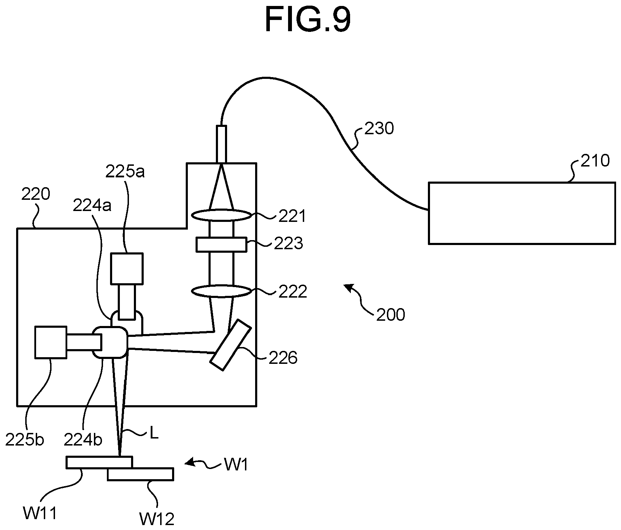

FIG. 9 is a diagram illustrating a schematic configuration of a laser welding apparatus according to a second embodiment. A laser welding apparatus 200 irradiates a workpiece W1 with a laser light L, and performs welding to the workpiece W1. The workpiece W1 is formed of two plate-like metal members W11 and W12 superposed on each other. The laser welding apparatus 200 achieves welding by the same functional principle as that of the laser welding apparatus 100. Therefore, in the following, an explanation will be given only of the apparatus configuration of the laser welding apparatus 200.

The laser welding apparatus 200 includes a laser device 210, an optical head 220, and an optical fiber 230.

The laser device 210 includes a laser oscillator, and is configured as in the laser device 110 and configured to output a laser light with a power of several kW, for example. The optical fiber 230 guides the laser light output from the laser device 210 and inputs the laser light to the optical head 220.

The optical head 220 is an optical device for radiating a laser light input from the laser device 210, toward the workpiece W1, as in the optical head 120. The optical head 220 includes a collimator lens 221 and a condenser lens 222.

Further, the optical head 220 includes a galvano-scanner arranged between the condenser lens 222 and the workpiece W1. The galvano-scanner is a device that controls the angles of two mirrors 224a and 224b to move the irradiation position of the laser light L and sweep the laser light L, without moving the optical head 220. The laser welding apparatus 200 includes a mirror 226 to guide the laser light L emitted from the condenser lens 222 to the galvano-scanner. Here, the angles of the mirrors 224a and 224b of the galvano-scanner are changed by the motors 225a and 225b, respectively.

The optical head 220 includes a DOE 223 as a beam shaper arranged between the collimator lens 221 and the condenser lens 222. The DOE 223 divides the laser light input from the collimator lens 221 to generate a main beam and at least one sub beam, as in the DOE 123. At least one sub beam is at least partly positioned ahead of the main beam in the sweep direction. Also in this embodiment, the power ratio can be set in the same way as the first embodiment described above.

### [Third Embodiment]

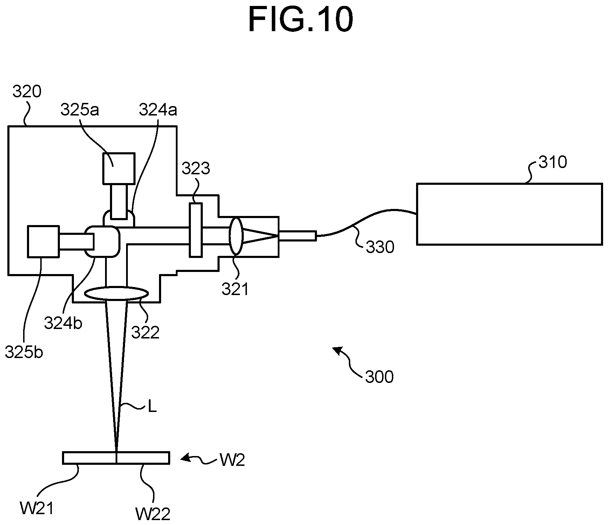

FIG. 10 is a diagram illustrating a schematic configuration of a laser welding apparatus according to a third embodiment. The laser welding apparatus 300 irradiates a workpiece W2 with a laser light L, and performs welding to the workpiece W1. The workpiece W2 is formed of two plate-like metal members W21 and W22 adjacent to and butted against each other. The laser welding apparatus 300 includes a laser oscillator and achieves welding by the same functional principle as that of the laser welding apparatus 100 or 200. The configurations of the components (a laser device 310 and an optical fiber 330) other than an optical head 320 are substantially the same as the corresponding components of the laser welding apparatus 100 or 200. Therefore, in the following, an explanation will be given only of the device configuration of the optical head 320.

The optical head 320 is an optical device for radiating a laser light input from the laser device 310, toward the workpiece W2, as in the optical head 120 or 220. The optical head 320 includes a collimator lens 321 and a condenser lens 322.

Further, the optical head 320 includes a galvano-scanner arranged between the collimator lens 321 and the condenser lens 322. The galvano-scanner includes mirrors 324a and 324b, the angles of which are changed by motors 325a and 325b, respectively. The optical head 320 is provided with the galvano-scanner at a position different from that in the optical head 220. However, as in the optical head 220, the optical head 320 controls the angles of the two mirrors 324a and 324b to move the irradiation position of the laser light L and sweep the laser light L, without moving the optical head 320.

The optical head 320 includes a DOE 323 as a beam shaper arranged between the collimator lens 321 and the condenser lens 322. The DOE 323 divides the laser light input from the collimator lens 321 to generate a main beam and at least one sub beam, as in the DOE 123 or 223. At least one sub beam is at least partly positioned ahead of the main beam in the sweep direction. Also in this embodiment, the power ratio can be set in the same way as the first embodiment described above.

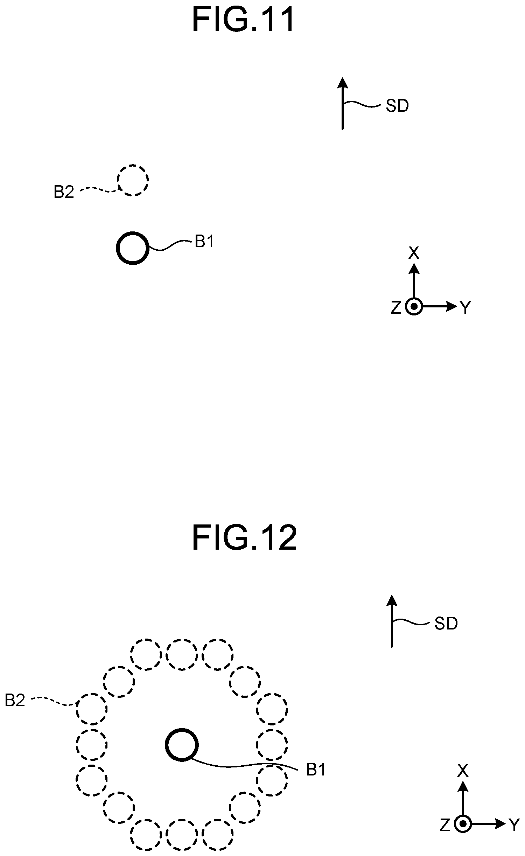

Further, FIGS. 11 to 14 illustrate other examples of the arrangement of a plurality of beams of a laser light L on the surface Wa of the workpiece W.

In the example of FIG. 11, the laser light L contains one main beam B1 and one sub beam B2, and the sub beam B2 is positioned ahead of and separated from the main beam B1 in the sweep direction SD (X-direction).

In the example of FIG. 12, the laser light L contains one main beam B1 arranged in the center and 16 sub beams B2 arranged in a ring pattern around the main beam B1.

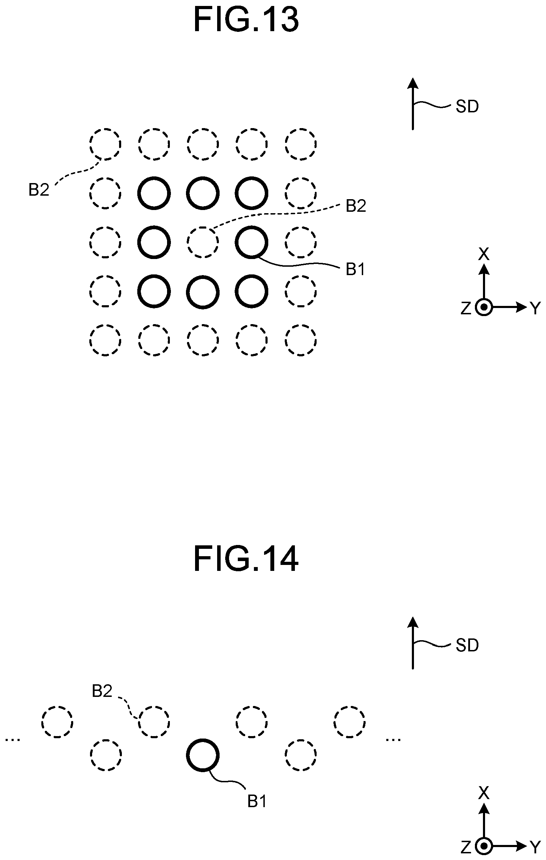

In the example of FIG. 13, the laser light L contains 25 beams arranged in a 5×5 square matrix format, and this matrix is composed of one sub beam B2 arranged in the center, 9 main beams B1 arranged in a 3×3 square pattern (quadrangular pattern) around the one sub beam B2, and 16 sub-beams B2 arranged in a square pattern (quadrangular pattern) around the main beams B1. Also in this example, the intervals between the beams in the row direction (Y-direction) and the intervals between beams in the column direction (X-direction or sweep direction SD) are all set to be the same.

In the example of FIG. 14, the laser light L contains a plurality of beams arranged in a zigzag (staggered) pattern extending in the Y-direction. In other words, each beam is present at an anterior position in the X-direction or present at a posterior position in the X-direction, and the position of the beam alternates between the anterior position and the posterior position along the Y-direction. One main beam B1 is positioned on the rear side at the middle in the Y-direction. A plurality of sub beams B2 are arranged forward and backward in the Y-direction with respect to the main beam B1. The intervals between beams adjacent to each other are substantially the same.

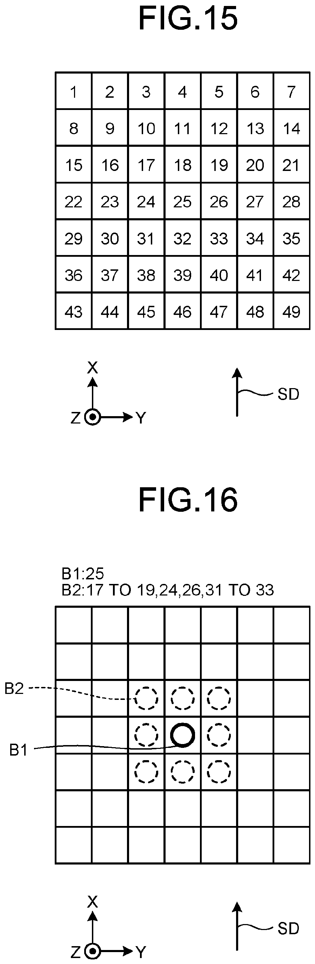

The arrangement pattern of a plurality of beams may be set in various ways other than the examples described above. Here, in order to explain variations of the arrangement of beams, a 7×7 matrix composed of cells with numbers 1 to 49 is introduced, as illustrated in FIG. 15. Each cell indicates the position of a beam. In the matrix illustrated in FIG. 15, the cell numbers are set such that the number of each row is larger in the backward direction of the X-direction (toward the rear side in the X-direction), and the number of each column is larger in the forward direction of the Y-direction (toward the front side in the Y-direction).

FIG. 16 illustrates, for the pattern of FIG. 3, the arrangement of the main beam B1 and the sub beams B2, the cell number where the main beam B1 is arranged, and the cell numbers where the sub beams B2 are arranged. As illustrated in FIG. 17, in the case of the pattern of FIG. 3, the main beam B1 is arranged at the position of number 25, and the eight sub beams B2 are arranged at the positions of numbers 17 to 19, 24, 26, and 31 to 33. Note that the matrix of FIG. 15 merely indicates the relative positions of the plurality of beams, and thus the size and interval of each beam can be changed as required.

For example, a plurality of beams may be arranged in accordance with each of the following patters [1] to [22]. Here, each number indicates the position of a cell in the matrix of FIG. 15.
[1] (FIG. 11) The main beam B1: 25
   The sub beam B2: 18
[2] The main beam B1: 25
   The sub beams B2: 18 and 32
[3] The main beam B1: 25
   The sub beams B2: 17 and 19
[4] The main beam B1: 25
   The sub beams B2: 17 to 19
[5] The main beam B1: 25
   The sub beams B2: 11, 17, and 19
[6] The main beams B1: 24 and 25
   The sub beams B2: 17 and 18
[7] The main beam B1: 25
   The sub beams B2: 18, 24, 26, and 32
[8] The main beam B1: 25
   The sub beams B2: 17, 19, 31, and 33
[9] (FIG. 3) The main beam B1: 25
   The sub beams B2: 17 to 19, 24, 26, and 31 to 33
[10] The main beam B1: 25
   The sub beams B2: 1, 3, 5, 7, 15, 21, 29, 35, 43, 45, 47, and 49
[11] (FIG. 4) The main beams B1: 24, 25, 31, and 32
   The sub beams B2: 16 to 19, 23, 26, 30, 33, and 37 to 40
[12] The main beam B1: 25
   The sub beams B2: 10 to 12, 16, 20, 23, 27, 30, 34, and 38 to 40
[13] The main beam B1: 25
   The sub beams B2: 9 to 13, 16, 20, 23, 27, 30, 34, and 37 to 41
[14] The main beam B1: 25
   The sub beams B2: 9 to 13, 16 to 20, 23, 24, 26, 27, 30 to 34, and 37 to 41
[15] (FIG. 12) The main beam B1: 25
   The sub beams B2: 3 to 5, 9, 13, 15, 21, 22, 28, 29, 35, 37, 41, and 45 to 47
[16] The main beam B1: 25
   The sub beams B2: 10 to 12, 16 to 20, 23, 24, 26, 27, 30 to 34, and 38 to 40
[17] The main beams B1: 18, 24 to 26, and 32
   The sub beams B2: 10 to 12, 16, 17, 19, 20, 23, 27, 30, 31, 33, 34, and 38 to 40
[18] The main beams B1: 17 to 19, 24 to 26, and 31 to 33
   The sub beams B2: 10 to 12, 16, 20, 23, 27, 30, 34, and 38 to 40
[19] The main beams B1: 17 to 19, 24, 26, and 31 to 33
   The sub beams B2: 10 to 12, 16, 20, 23, 25, 27, 30, 34, and 38 to 40
[20] The main beams B1: 18, 24 to 26, and 32
   The sub beams B2: 9 to 13, 16, 17, 19, 20, 23, 27, 30, 31, 33, 34, and 37 to 41
[21] The main beams B1: 17 to 19, 24 to 26, and 31 to 33
   The sub beams B2: 9 to 13, 16, 20, 23, 27, 30, 34, and 37 to 41
[22] (FIG. 12) The main beams B1: 17 to 19, 24, 26, and 31 to 33
   The sub beams B2: 9 to 13, 16, 20, 23, 25, 27, 30, 34, and 37 to 41

As illustrated in FIG. 12, a plurality of sub beams B2 may be arranged in a substantially circular ring pattern or a substantially circular arc pattern. In this case, the centers of the respective sub beams B2 may be arranged on the same circumference.

The embodiments of the present invention have been described above, but these embodiments have been presented as mere examples, and not intended to limit the scope of the invention. The embodiments described above may be implemented in a variety of other forms, and may be provided with various omissions, substitutions, combinations, and changes, without departing from the spirit of the invention. Further, the specifications of each of the constituent elements, shapes, or the like (structure, type, direction, model, size, length, width, thickness, height, number, arrangement, position, material, and/or the like) may be implemented along with suitable changes.

For example, in each of the embodiments described above, the welding manner of the main beam (main power region) may be a keyhole type welding or a heat conduction type welding. The keyhole type welding mentioned here is a welding method using a keyhole. On the other hand, the heat conduction type welding is a welding method that melts a workpiece by use of the heat generated by absorbing the laser light on the surface of the workpiece.

Further, all the sub beams may have the same power, or one or some sub beams may have a power higher than those of the other sub beams. Further, a plurality of sub beams may be classified into a plurality of groups, where the sub beams are almost the same in power in the same group, and the sub beams are different in power between the groups. In this case, when the sub beams classified into a plurality of different groups are compared, the power may be different stepwise. Here, the number of sub beams included in a certain group is not limited to a plurality, but may be one.

Further, the material of the workpiece is not limited to stainless steel.

Further, the workpiece is not limited to a plate-like material, and the welding manner is not limited to lap welding or butt welding. Therefore, the workpiece may be formed of at least two members to be welded that are superposed on, in contact with, or adjacent to each other.

Further, when sweeping a laser light with respect to a workpiece, the sweeping may be performed by known wobbling, weaving, output modulation, or the like, to adjust the surface area of the molten pool.

Further, the workpiece may be a piece in which another thin metal layer is present on the surface of the metal, such as a plated metal plate.

### Industrial Applicability

The present invention is applicable to a welding method and a welding apparatus.

### Reference Signs List

100, 200, 300 laser welding apparatus (welding apparatus)
110, 210, 310 laser device (laser oscillator)
120, 220, 320 optical head
121, 221, 321 collimator lens
122, 222, 322 condenser lens
123, 223, 323 DOE (diffractive optical element)
123a diffractive grating
130, 230, 330 optical fiber
224a, 224b, 226, 324a, 324b mirror
225a, 225b, 325a, 325b motor
A region (present ahead in sweep direction)
B1 main beam (beam, main power region)
B1f front end
B2 sub beam (beam, sub power region)
bd diameter (of beam)
bi minimum distance (between beams)
L laser light
SD sweep direction
VL virtual straight line
W, W1, W2 workpiece
Wa surface
W11, W12, W21, W22 metal member
Wm weld zone
w, w1, w2 distance (width)
x1, y1 position
X direction
Y direction
Z direction (normal direction)

## Claims

1. A welding method comprising:
irradiating a surface of a workpiece with a laser light that moves relatively to the workpiece in a sweep direction; and
performing welding by melting a part of the workpiece irradiated with the laser light, wherein
the laser light includes a plurality of beams,
the plurality of beams include at least one main beam and at least one sub beam smaller in power than the main beam,
a main power region including the at least one main beam and a sub power region including the at least one sub beam are formed on the surface, and
a minimum distance between centers of adjacent ones of the plurality of beams on the surface is 75 um or less.

2. The welding method according to claim 1, wherein the laser light is a single mode laser light.

3. The welding method according to claim 1 or 2, wherein, on the surface, each of the plurality of beams has a diameter of 100 um or less.

4. The welding method according to any one of claims 1 to 3, wherein, on the surface, a distance between centers of the plurality of beams most distant in a direction orthogonal to the sweep direction is 300 um or less.

5. The welding method according to any one of claims 1 to 4, wherein a ratio of a power of the main power region and a power of the sub power region falls within a range of 72:1 to 1:50.

6. The welding method according to any one of claims 1 to 5, wherein the at least one sub beam is arranged ahead of the at least one main beam in the sweep direction.

7. The welding method according to any one of claims 1 to 6, wherein the at least one sub beam is arranged behind the at least one main beam in the sweep direction.

8. The welding method according to any one of claims 1 to 7, wherein the at least one sub beam is arranged with respect to the at least one main beam with a shift in a direction intersecting with the sweep direction.

9. The welding method according to any one of claims 1 to 8, wherein, as the at least one sub beam, a plurality of sub beams are arranged around the at least one main beam.

10. The welding method according to claim 9, wherein the plurality of sub beams are arranged in a circular arc pattern.

11. The welding method according to claim 9, wherein the plurality of sub beams are arranged in a quadrangular pattern.

12. The welding method according to any one of claims 1 to 11, wherein the main power region and the sub power region are arranged such that a molten pool formed by the at least one main beam contained in the main power region and a molten pool formed by the at least one sub beam contained in the sub power region partially overlap each other.

13. The welding method according to any one of claims 1 to 12, wherein a wavelength of a laser light of the at least one main beam contained in the main power region and a wavelength of a laser light of the at least one sub beam contained in the sub power region are equal to each other.

14. The welding method according to any one of claims 1 to 13, wherein a wavelength of a laser light of the at least one sub beam contained in the sub power region is a wavelength that has a higher absorption rate for the workpiece as compared with a wavelength of a laser light of the at least one main beam contained in the main power region.

15. The welding method according to any one of claims 1 to 14, wherein a laser light of the at least one main beam contained in the main power region and a laser light of the at least one sub beam contained in the sub power region are emitted from a common oscillator.

16. The welding method according to any one of claims 1 to 15, wherein a laser light of the at least one main beam contained in the main power region and a laser light of the at least one sub beam contained in the sub power region are emitted from different laser oscillators.

17. The welding method according to any one of claims 1 to 16, wherein M² beam quality of the laser light is 1.3 or less.

18. The welding method according to any one of claims 1 to 17, wherein a distance between centers of the plurality of beams is 5 um or more.

19. The welding method according to any one of claims 1 to 18, wherein arrangement of the plurality of beams is formed by a beam shaper.

20. The welding method according to claim 19, wherein the beam shaper is a diffractive optical element.

21. The welding method according to any one of claims 1 to 20, wherein the workpiece includes at least two members superposed on each other.

22. The welding method according to any one of claims 1 to 21, wherein a diameter of the main beam is equal to a diameter of the sub beam.

23. A welding apparatus comprising:
a laser oscillator; and
an optical head configured to
irradiate a surface of a workpiece with a laser light including a plurality of beams obtained by shaping light emitted from the laser oscillator, and
perform welding by melting a part of the workpiece irradiated with the laser light,
wherein the welding apparatus is configured to:
perform relative displacement between the workpiece and at least part of the optical head to move the laser light relatively to the workpiece in a sweep direction;
cause the plurality of beams to include at least one main beam and at least one sub beam smaller in power than the main beam;
form a main power region including the at least one main beam and a sub power region including the at least one sub beam on the surface; and
set a minimum distance between centers of adjacent ones of the plurality of beams on the surface to be 75 um or less.
